# EUROPEAN PATENT APPLICATION

(11) **EP 2 767 930 A2**
(43) Date of publication of application: **20.08.2014**
(21) Application number: 12835834.8
(22) Date of filing: 27.09.2012
(51) Int. Cl.: G06K 9/46

(54) **METHOD, APPARATUS AND COMPUTER READABLE RECORDING MEDIUM FOR MANAGING A REFERENCE FACE DATABASE TO IMPROVE FACE RECOGNITION PERFORMANCE UNDER A RESTRICTED MEMORY ENVIRONMENT**

(30) Priority: 27.09.2011 KR 20110097796
(71) Applicant: Intel Corporation, Santa Clara, CA 95054 (US)
(72) Inventor: JE, Hongmo, Seoul 153-806 (KR); LEE, Hyungsoo, Gangdong-gu, Seoul 134-867 (KR); RYU, Wooju, Seoul 135-919 (KR)
(74) Representative: Goddar, Heinz J.
(86) International application number: PCT/KR2012/007854
(87) International publication number: WO 2013/048162

(57) **Abstract**

An embodiment of the present invention presents a method for managing a reference face database to improve face recognition performance under a restricted memory environment, said method comprising: a step of acquiring a new input face image; a step of determining a classification condition corresponding to the input face image with reference to classification conditions of existing registered face images of a reference face database used for face recognition; and a step of, if the classification condition corresponding to the input face image is a specific classification condition and the value of the face image corresponding to the specific classification condition in the reference face database is less than a preset threshold 9 value, selecting the input face image as an image which can be additionally registered to the reference face database.

## Description

### Technical Field

The present invention is related to a method, apparatus and computer readable recording medium for additional face image registration/deletion intended to elevate the recognition rate of the face included in multimedia contents (photograph, video) acquired from a digital photographing device based on face recognition (digital camcorder, digital camera, camera phone, etc.) and more specifically to the method, apparatus and computer readable recording medium that uses a digital photographing device with a limited memory resource to select face images intended to additionally register in a database for improving face recognition performance upon photographing with a camera and to replace the existing face images stored.

### Background Technology

As markets for camera phones including smartphones, digital camcorders, digital cameras, etc. have expanded, photographing techniques for pictures or video are advancing every day. When a digital photographing device is used to photograph an object, such technology has been developed in which the face of a person is recognized out of the images to be photographed, and focusing is made based on the face or photographing is automatically carried out when the face to be photographed has a specific expression.

However, in face recognition under a typical environment, images photographed at various facial angles, various facial expressions and lighting on a face in various directions (natural lighting, artificial lighting, etc.) become the cause of performance deterioration in face recognition. In order to overcome the above, various face images are registered in advance in registering basic reference face images in a database for face recognition so that effective improvement on face recognition performance may be available. However, since memory resources of a digital photographing device including digital camera and camera phone are restricted, there has been a problem such that all the face shapes could not be stored.

Therefore, such an efficient method is in demand so that efficient face images for face recognition performance are selected from face images that are newly photographed or entered and registered, and restricted memory resources are taken into account to delete a part among the existing face images that are stored.

### Detailed Description of the Invention

### Technical Tasks

The present invention has as its objective to solve all the problems described above.

In addition, the present invention has as its objective to provide a method for selecting and registering face images to obtain the higher rate of face recognition even though the environment such as posture, expression, and angle of lighting changes during photographing with a camera.

In addition, the present invention has another objective to provide a method that enables to delete registered images that are least necessary for face recognition among the existing face images registered in order to efficiently utilize restricted memory resources of a digital photographing device.

### Means of Task Resolution

The following describes the representative configuration of the present invention to achieve the objectives described above.

According to one aspect of the present invention, a method is provided for managing a reference face database to improve face recognition performance under a restricted memory environment comprising a step in which a new input face image is acquired; a step in which a classification condition corresponding to the input face image is determined with reference to classification conditions of the existing registered images of a reference face database used for face recognition; and a step in which, if the classification condition corresponding to the input face image is a specific classification condition and the value of the face image corresponding to the specific classification condition in the reference face database is less than a preset threshold value, the input face image is selected as an image which can be additionally registered to the reference face database.

According to another aspect of the present invention, an apparatus is provided for managing a reference face database to improve face recognition performance under a restricted memory environment comprising a reference face database that records face images used for face recognition; and an additional registered face selection unit that, if a new input face image is acquired, determines the classification condition corresponding to the face input image with reference to the classification conditions which the existing registered face images of the reference face database have, and if the classification condition corresponding to the input face image is a specific classification condition and the value of the face image corresponding to the specific classification condition in the reference face database is less than a preset threshold value, it selects the input face image as an image which can be additionally registered to the reference face database.

In addition, another method and apparatus are further provided for implementing the present invention, and a computer readable recording medium for executing the method.

### Effects of the Invention

According to the present invention, the most efficient face image may be selected and additionally registered to a reference face database for face recognition so that, if a person is photographed with a digital photographing device, etc., the person may be recognized at a high recognition rate, and the most inefficient images in part are deleted from the existing registered face images for the face images to be newly added to a reference face database so that efficient use of insufficient memory resources is enabled.

### Brief Description of the Drawings

Figure 1 is a drawing showing the configuration of a digital apparatus according to one embodiment example of the present invention.
Figure 2 is a flow chart showing the method for selecting a face image to be additionally registered according to one embodiment example of the present invention.
Figure 3 is a drawing on a reference face database illustrating the process in which the digital apparatus using the method according to one embodiment example of the present invention selects a face image to be additionally registered.
Figure 4 is a flow chart showing the method for selecting a face image to be additionally registered according to another embodiment example of the present invention.
Figure 5 to Figure 8 are flow charts showing the method according to one embodiment example of the present invention in which an inefficient face image for face recognition is selected from the existing face images registered to a reference face database and deleted.

### Embodiments of the Invention

The following describes the present invention in detail by referring to the attached drawings for illustrating a specific embodiment example for which the present invention can be implemented. Such embodiment examples are described in detail to the extent that a person skilled in the art is able to implement the present invention. It must be understood that while various embodiment examples of the present invention are different from one another, they need not be mutually exclusive. For example, any specific shape, structure and characteristic described herein may be implemented in a different embodiment example while they do not exceed the spirit and scope of the present invention in relation to its one embodiment example. In addition, it must also be understood that the location or deployment of an individual component in each of the embodiment examples disclosed may be changed as long as it does not exceed the spirit and scope of the present invention. Therefore, the detailed description described below is not intended to be given in a restrictive meaning but the scope of the invention, if described appropriately, is restricted by the claims attached only in addition to the entire scope equivalent to what the claims assert. A similar reference numeral in the drawings refers to an identical or similar function over a number of aspects.

The following describes the preferred embodiment examples of the present invention in detail by referring to the attached drawings so that a person having common knowledge of the technical field to which the present invention belongs may carry out the present invention easily.

In order to focus on the face of a person or to photograph a specific expression during photographing with a camera, the face of the person included in the image photographed must be detected first and then the detected face is compared with the existing reference face image stored in a database and recognized. However, if a reference face image for face recognition has been generated under the conditions of one expression, one photographing posture and one lighting direction, the rate of face recognition must be significantly low. This is because, if the face of a person called A has been photographed in a different expression, different posture and different lighting direction from the reference image of the person called A that is stored in a database, it is highly unlikely to recognize the person called A even though the image of the person called A exists in the reference face image stored in the database. Certainly, while the face image of an applicable person is stored in a database one by one and in various ways to enhance the rate of face recognition, it presents a problem such that the memory storage space of a portable device, for example, digital camera or camera phone, is too small to store such various face images.

The present invention presents a method that enables to select the most efficient face image and additionally register it in the reference face database for face recognition so that the rate of face recognition may be enhanced in a restricted memory space and to delete a part of the most inefficient images from the existing face images stored for the face image newly added to the reference face database, an apparatus base on the method, and a computer readable recording medium in which this method is recorded.

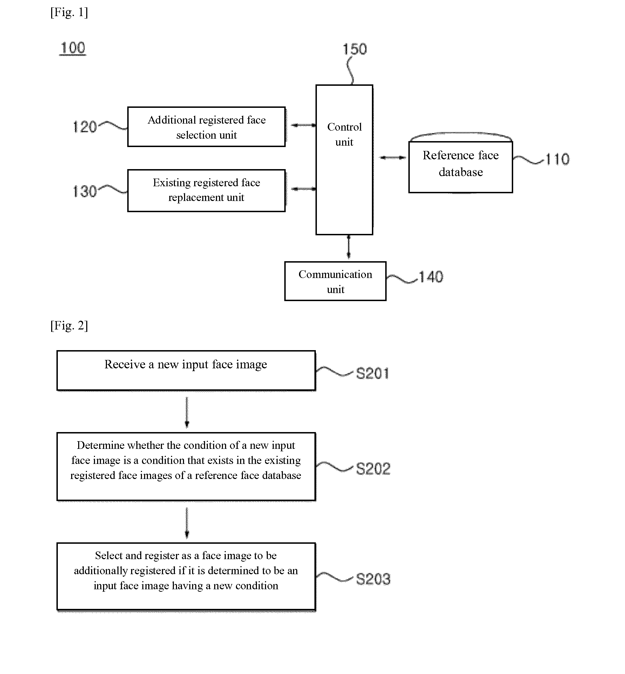

Figure 1 is a drawing that illustrates the configuration of the digital apparatus (100) according to the present invention.

In reference to Figure 1, the digital apparatus (100) may comprise a reference face database (110), an additional registered face selection unit (120), an existing registered face replacement unit (130), a communication unit (140) and a control unit (150).

According to one embodiment example of the present invention, a reference face database (110), an additional registered face selection unit (120), an existing registered face replacement unit (130), a communication unit (140) and a control unit (150) may be included in a digital apparatus (100) at least in part or program modules communicating with a digital apparatus (100). However, in Figure 1, a digital apparatus (100) is illustrated such that a reference face database (110), an additional registered face selection unit (120), an existing registered face replacement unit (130), a communication unit (140) and a control unit (150) are in their entirety included in a digital apparatus (100). At least a part of such program modules may be included in a digital apparatus (100) in the form of an operating system, application program module and other program modules, and also be stored in various well-known memory devices physically. In addition, at least a part of such program modules may also be stored in a remote memory that can communicate with a digital apparatus (100). Such program modules include routine, sub-routine, program, object, component, data structure, etc. that perform a specific task or execute a specific abstract data type to be described later according to the present invention but are not limited to them.

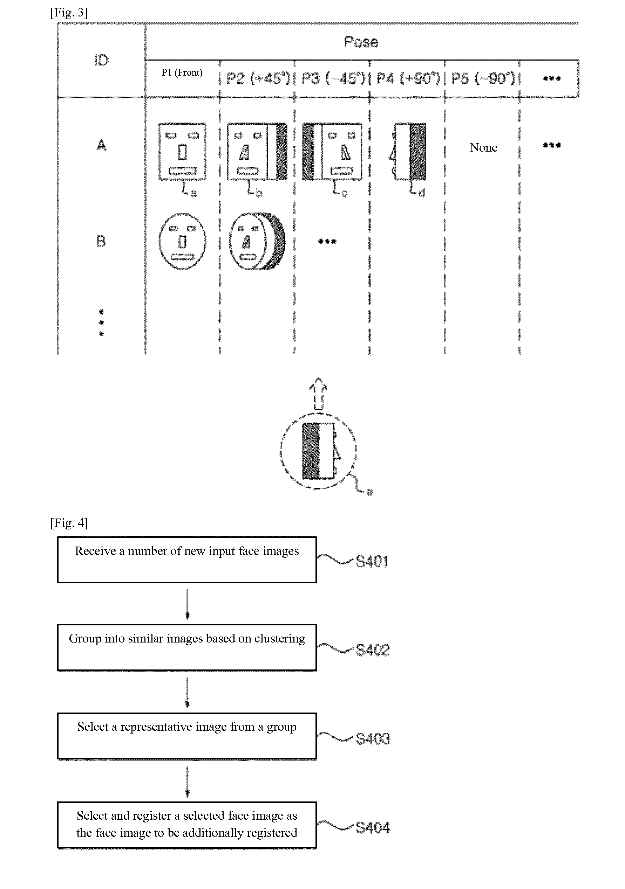

First, a reference face database (110) may record data based on the angle of the face of a specific person including a photograph of a person taken from the front, a photograph taken by rotating around a face at 45 degrees to the right, a photograph taken by rotating around a face at 45 degrees to the left, a photograph taken by rotating around a face at 90 degrees to the right, a photograph taken by rotating around a face at 90 degrees to the left, and the like (refer to Figure 3 to be described below). In this case, each angle is certainly nothing more than being illustrative, and various modified examples that are expanded three-dimensionally are also available including a photograph taken by lifting a face upward at 30 degrees, a photograph taken by lowering a face upward at 60 degrees, etc.

In addition, in a reference face database (110), data may be recorded based on the angle of lighting illuminated on the face of a specific person including a photograph taken by lighting from the front, a photograph taken by lighting from the right side of a person, a photograph taken by lighting from the left side of a person, a photograph taken by lighting from the bottom of a person, a photograph taken by lighting from the top of a person, etc. (not illustrated). In this case, each angle of lighting is certainly nothing more than being illustrative, and various modified examples that are expanded three-dimensionally are also available including a photograph taken by lighting at the top left of a face by 30 degrees, a photograph taken by lighting at the bottom right of a face by 60 degrees, a photograph taken by lighting in between the front and right side of a face, etc. Furthermore, portrait photographs may be certainly classified and recorded according to the type of light source (indoor and outdoor light sources, natural light, ambient light, etc.).

Next, an additional registered face selection unit (120) may perform the function of selecting whether, if a new input face image of a specific person is inputted, the new input face image is stored in a reference face database (110). At this time, the additional registered face selection unit (120) may also select whether the new input face image is stored in a reference face database (110) after identifying a face image of the specific person stored in the reference face database (110).

Figure 2 is a flow chart showing the method for selecting a face image to be additionally registered according to one embodiment example of the present invention.

The additional registered face selection unit (120) according to one embodiment example of the present invention presents a method wherein, in order to select a face image for recommending and registering a new input face image, it is recognized whether a new input face image has a new registration condition for face recognition and then, if it is decided that a new input face image condition is satisfied, it is selected as a candidate face to be registered in the reference face database (110).

In reference to Figure 2, the additional registered face selection unit (120) according to one example of the present invention first receives a new face image from the outside of the reference face database (110) in which an existing registered face image has been stored (S201). The new face image delivered from the outside may be a new photographed image or the existing images stored in an external memory space. Certainly, in an exceptional case, even the data that have already been received inside of a reference face database (110) may be a target of the step S201, provided that its condition has not been determined yet whether it has a new registration condition for face recognition.

Next, it is determined whether the condition of a new input face image is the condition existing in the registered face images in a reference face database (110) (S202).

At this time, the condition of a new input face image becomes the basis by which classification may be made according to the feature of the input face image and includes the conditions based on external environment including photographed posture of a input face image, i.e., posture, expression, the angle by which a face image is photographed, and the direction of light illuminated on a face. For example, if a new input face image is divided according to expressions, the criteria may include the smiling face, expressionless face, angry face, and frowning face, and a face image is classified according to such criteria. In addition, if a new input face image is classified according to the angle used for photographing a face, the criteria may include whether a face is photographed from the front, photographed from left or right side, photographed by slightly distorting to the left or right from the front, photographed by significantly distorting to the left or right from the front, photographed slightly upward from the front, photographed slightly downward from the front, photographed significantly upward from the front, photographed significantly downward from the front, or photographed at top left, bottom left, top right, or bottom right from the front, and an input face image is classified according to such criteria. If a new input face image is classified based on the lighting direction of an image, its criteria may include lighting directions to the face front, face rear, face left and right sides, and face up and down sides, and an input face image is classified based on such criteria.

Specifically, assuming the input face image of a person called A, its input face image is classified based on various features as described above, and it is determined whether such classified conditions (for example, at least one of certain postures, certain expressions and certain lighting angles) already exist in the face images of the person called A included in a reference face database (110). For example, if only the face image photographed at the right and the face image photographed from the front exist in the face images of a person called A that are registered in a reference face database (110) and if a new input face image is the image of the face of a person called A photographed from the left, data for the face image photographed from the left do not exist in a reference face database (110) (namely, because the condition that the face of a person called A has been photographed from the left is a condition that does not exist in a reference face database (110)); a new input face image may be selected as an image that may be additionally registered in a reference face database (110) and then registered (S203).

However, not only the specialized case described above but also the general case below may also be applied. For example, such a method may also be conceived wherein, if classification conditions corresponding to the input face image are determined with reference to the classification conditions that the existing registered face images of a reference face database (110) have and the classification conditions corresponding to the input face image are specific classification conditions, then the input face image is selected as an image that may be additionally registered in the reference face database, provided that the face image corresponding to the specific classification conditions in the reference face database is less than a preset threshold value. At this time, when the case in which a face image corresponding to the specific classification conditions is less than a preset threshold value that is determined, it may be determined based on a specific person only or also determined by taking a typical person into account.

Figure 3 is a drawing that illustrates the process in which the additional registered face selection unit (120) based on the method according to one embodiment example of the present invention selects a face image to be additionally registered.

The face image selection method illustrated in Figure 3 shows an example that determines a new face image based on the face photographing angle. In reference to Figure 3, if the face images of a person called A range a to d among the existing face images stored in the reference face database (110) for face recognition (a is a photograph taken from the front; b is a photograph taken in the state after a face is rotated to the right by 45 degrees; c is a photograph taken in the state after a face is rotated to the left by 45 degrees, and d is a photograph taken in the state after a face is rotated to the right by 90 degrees) and if a new input face image is the face image of a person called A and the same as e (e is a photograph taken in the state after a face is rotated to the left by 90 degrees), the additional registered face selection unit (120) according to the present invention determines whether the photographing angle used for the face image of a person called A included in e is a different type from the photographing angle used for the face image of a person called A stored in the existing reference face database (110) or the same type that may be included in the photographing angle of a face image stored in the reference face database (110). At this time, if it is determined that the photographing angle of a new face image is included in the type of the photographing angle of the face image stored in the reference face database (110) (two photographing angles need not match precisely and be within a similar range sufficient for face recognition), it would be determined to be the form of a face image stored in the reference face database (110). For example, if the new input face image of a person called A, f (not illustrated), represents a photograph taken in the state after the face is rotated to the right by 50 degrees, it is within a similar range of the face image b of a person called A that has been stored in the reference face database (110), so the additional registered face selection unit (120) may not register the new input face image f in the reference face database (110).

Nevertheless, as in Figure 3, the photographing angle of the new input face image e represents the photograph taken in the state after the face of a person called A has been rotated to the left by 90 degrees so the state is not present in the existing photographing angle of the face image of a person called A that has been registered in the reference face database (110). As a result, the additional registered face selection unit (120) according to the present invention adds the new input face image e of a person called A to the reference face database (110).

In Figure 3, while a face image is classified based on a photographing angle alone and a new face image is searched and additionally registered, the photographing device according to the present invention that selects a new face image to be registered may also be used upon combining at least a part of the photographing angle, expression, lighting, etc. Thus, it may represent a method for enhancing the rate of the face recognition wherein, even the images of the practically same photographing angle face different lighting directions, a photographing device such as digital camera may determine that they are of a different face and the probability of face recognition may deteriorate, so various face images for each photographing angle or expression to which a lighting direction has been differently applied are determined to be different conditions and recorded in a reference face database (110) based on the condition.

Figure 4 is a flow chart showing the method for selecting a face image to be additionally registered according to another embodiment example of the present invention.

The additional registered face selection unit (120) according to another embodiment example of the present invention may present a method wherein, in order to select a face image for recommending and registering a new face image, at least one candidate face image to be additionally registered is subject to clustering outside the reference face database (110) according to a specific face recognition metric, and then a representative face image that enables to recognize properly other remaining faces is automatically recommended.

While the method for face image selection in the embodiment example of Figure 2 presents a method in which a new input face image delivered from the outside of the reference face database (110) is individually determined, and it is determined whether it is selected as a face image to be recorded in the reference face database (110), the method for face image selection according to another embodiment example of Figure 4 presents a method in which a number of new face images are delivered from the outside of a reference face database (110) and a face image that can represent them is selected and recommended as a face image to be registered in the reference face database (110).

In reference to Figure 4, the additional registered face selection unit (120) according to another embodiment example of the present invention first receives at least one new input face image delivered from outside a reference face database (110) (S401). Furthermore, the additional registered face selection unit (120) performs clustering on the new input face images delivered by a face recognition metric and groups them into similar images (S402). Such clustering means that a matching value for face recognition is individually calculated from each image, and images with high similarity are grouped based on the matching values calculated or those with the short distance in-between describers (for example, Euclidean distance) among key points are grouped. Namely, while the new input face images that are delivered are different from one another, it is necessary to group them into the face images in a similar form, i.e., postures or expressions in a similar form, photographing angles in a similar form, lightings in a similar form, etc.

Then, the additional registered face selection unit (120) selects a centroid image or the face image representing a mean image from the group as similar images (S403). This process means that a standard face image that can represent the group the best among the face images grouped into similar images is selected as the representative image of the group. For example, in the clustering step, the face image having a matching value closest to the matching value which becomes a centroid or mean among the matching values calculated from individual images may be selected as the representative face image of the group. Simply speaking, while the face images grouped into the front face images are not in fact the identical images but have different expressions, the image that becomes the standard of such grouped face images is selected as the representative.

Afterward, the additional registered face selection unit (120) selects face images such as the images that may be additionally registered to the existing registered face images in the reference face database (110) and registers them (S404).

In addition to the examples mentioned in the above, the following modified embodiment examples may be conceived. For example, in the additional registration of a representative face image to a reference face database (110), the classification conditions corresponding to the representative face image are determined with reference to the classification conditions which the existing registered face images of the reference face database (110) have. In addition, if the classification conditions corresponding to the representative face image are assumed to be specific classification conditions, the representative face image may also be additionally registered to the reference face database (110), provided that the face image corresponding to the specific classification conditions is less than the preset threshold value in the reference face database (110).

On the other hand, the existing registered face replacement unit (130) may also select an existing face image stored in a reference face database (110) from the face images stored in the reference face database (110) and have them deleted to the extent that new input face images are added or to the extent that a desired portion of the storage space is secured (i.e., existing registered face images are deleted instead of registering new input face images so that replacement is made with efficient face data for face recognition).

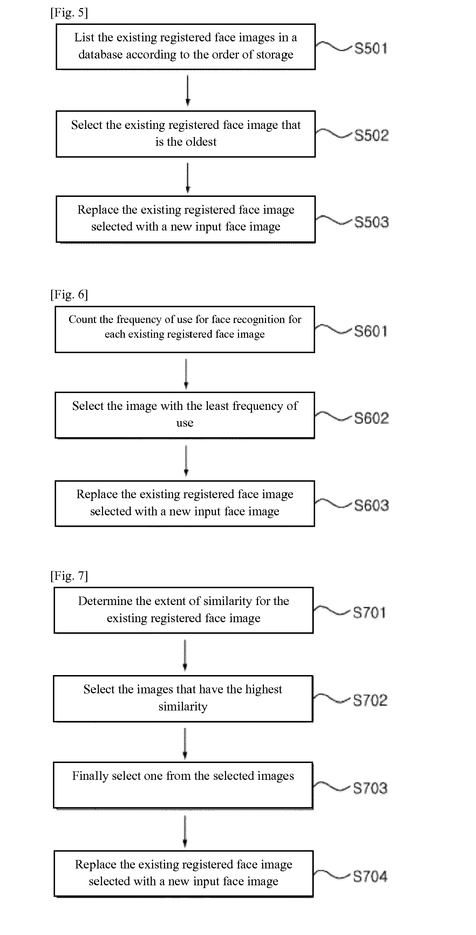

Figure 5 shows a flow chart showing the method according to one embodiment example of the present invention in which an existing registered face replacement unit (130) selects the face image replaced with a new input face image (i.e., face image to be deleted) among the existing registered face images in a reference face database (110).

The existing registered face replacement unit (130) according to one embodiment example of the present invention may select the face image which has been stored the longest in a reference face database (110) in order to select a face image to be replaced with a new input face image among the existing registered face images.

Referring to Figure 5, the existing registered face replacement unit (130) according to one embodiment example of the present invention first prioritizes the existing registered face images in a reference face database (110) in the order of storage in order to select an existing registered face image to be replaced (S501). At this time, an instance may be conceived such that the order information that has already been prioritized in the order of storage is simply referred to. Then, the oldest existing registered face image may be selected (S502) and then deleted. In this case, the existing registered face image that is selected may also be replaced with a new input face image (S503).

Figure 6 shows a flow chart showing the method according to another embodiment example of the present invention in which an existing registered face replacement unit (130) selects a face image to be replaced with a new face image among the existing required face images.

The method for selecting a face image to be replaced with a new face image among the existing required face images according to another embodiment example of the present invention presents such selection method wherein the frequency of matching upon succeeding in face recognition is counted and then an existing registered face image with the least matching frequency is determined to contribute less to recognition performance to make the replacement.

In reference to Figure 6, the existing registered face replacement unit (130) according to another embodiment example of the present invention first counts the frequency used for face recognition for each of the existing registered face images in a reference face database (110) in order to select the existing registered face image to be replaced (S601). For example, if there are 20 face images stored in a reference face database (110), the frequency of use for face recognition from the first face image to the 20^{th} face image is counted cumulatively from the preset timing to the present (i.e., in order to recognize the identity of the face included in a new input image, the frequency of each similarity matching used is counted for each of the face images in the reference face database (110) that is used as a similarity matching target).

Then, the existing registered face replacement unit (130) may select the existing registered face image with the least frequency of use for face recognition (S602) and delete it. At this time, the existing registered face image that is selected may also be replaced with a new input face image (S603).

In other words, if there is an image taken overhead among the existing registered face images in a reference face database (110), and if the instance of photographing overhead rarely exists among the newly photographed images so that the instance of using the existing registered image for face recognition is extremely rare, the existing registered face replacement unit (130) determines that this existing registered face image contributes less to recognition performance and selects it as the target of deletion or replacement.

Figure 7 is a flow chart showing the method according to another embodiment example of the present invention in which an existing registered face replacement unit (130) selects a face image to be replaced with a new face image among the existing registered face images.

The existing registered face replacement unit (130) according to another embodiment example of the represent invention may compare each of the face images stored in a reference face database (110) and identify the extent of similarity among them to select the face image replaced with a new input face image among the existing registered face images before it selects one of the most similar face images as an image to be replaced. If two or more identical face images exist, this method brings about a result such that in comparison with the instance when there is only one identical face image, the rate of face recognition is identical and only the space of a reference face database (110) is taken up, and it is determined to be without any problems to delete one of them.

In reference to Figure 7, the method for selecting the existing registered face image to be replaced according to another embodiment example of the present invention first determines the extent of similarity among the existing registered face images in a reference face database (110) (S701) and selects the most similar face images (S702). At this time, the process of determining the extent of similarity may use a scheme such that the difference between matching values for face recognition is used for each of the face images in a reference face database (110) (for example, the face image of a person called A is used as a target), and the extent of similarity between two face images is determined to be higher with a smaller difference between matching values. Then, one of the two face images that have been determined to be the most similar is finally selected as an image to be replaced (S703), and it may be deleted. At this time, the existing registered face image selected may also be replaced with a new input face image (S704).

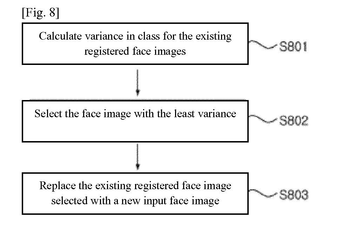

Figure 8 is a flow chart showing the method according to another embodiment example of the present invention in which an existing registered face replacement unit (130) selects a face image to be replaced with a new face image among the existing registered face images.

The existing registered face replacement unit (130) according to another embodiment example of the present invention presents a method wherein, in order to select a face image to be replaced with a new input face image among the existing registered face images, variance in class of the face images stored in a reference face database (110) is calculated and then the face image with the least variance of face images is selected as an image to be replaced.

Because this method, as in the embodiment example of Figure 7, brings about such a result in which if two or more identical face images exist, the rate of face recognition is identical in comparison with the instance when there is one identical face image and only the space of a reference face database (110) is taken up, and it is determined to be without any problems to delete one of them. However, it presents a method in which face images in a reference face database (110) are calculated for their variance in class without determining the similarity on a 1:1 basis to select one with the least variance.

In reference to Figure 8, the existing registered face replacement unit (130) according to another embodiment example of the present invention first calculates variance in class among the existing registered face images in a reference face database (110) to select the existing registered face image to be replaced (S801) and the selects the face image with the least variance of face images (S802). At this time, the process for calculating the variance in class may also be based on the known process for various calculations, and variance may also be found by the method wherein one of the existing registered face images is selected; the mean of face recognition matching values for the remaining registered face images except for the face image that is selected is found, and then the difference between the face recognition matching value of one existing registered face image selected and the mean of remaining face recognition matching values is found. In addition, variance may also be found by the method other than excluding one of the existing registered face images that the difference between the mean of entire face recognition matching values and each of the face recognition matching values is found.

Moreover, this selected image may be replaced with a new face image (S803) and it may be deleted. At this time, the existing registered face image that is selected may also be replaced with a new input face image.

On the other hand, the method described in Figure 2 and Figure 4 that a new image is selected as a face image to be additionally registered and the method described in Figure 5 to Figure 8 that an image to be replaced is selected may certainly be combined in various ways and used.

The embodiment examples according to the present invention described above may be implemented in the form of programming command that may be performed via various computer components and recorded on a computer readable recording medium that is recommended. The computer readable recording medium that is recommended may include programming command, data file, data structure, etc. by itself or in combination. The programming commands recorded on the computer readable recording medium that is recommended may be those that are specifically designed and configured for the present invention or those that are known to and recommended for use by a person skilled in the field of computer software. Examples of the computer readable recording medium that is recommended include magnetic medium such as hard disc, floppy disc, and magnetic tape, optical recording medium such as CD-ROM and DVD, magneto-optical media such as floptical disk, and hardware device such as ROM, RAM, and flash memory that is specifically configured to store and perform programming commands. Examples of the programming command include not only machine codes that are prepared by a compiler but also advanced language codes that may be executed by a computer using interpreter, etc. The hardware device may be configured to operate as one or more software modules in order to perform processing according to the present invention, and its reverse also applies.

While the present invention was described in the above by specific items such as specific components, etc. and by limited embodiment examples and drawings, they were merely provided to help with the overall understanding of the present invention, and the present invention is not limited by the embodiment examples. A person having common knowledge in the technical field to which the present invention belongs may employ various changes and modifications from such descriptions.

Therefore, the idea of the present invention shall not be limited to the embodiment examples described above, but the patent claims described below and all that is modified to be equal or equivalent to the patent claims would belong to the scope of the idea of the present invention.

## Claims

1. A method for managing a reference face database to improve face recognition under a restricted memory environment comprising,
a step in which a new input face image is acquired;
a step in which a classification condition corresponding to the input face image is determined with reference to classification conditions of the existing registered images of a reference face database used for face recognition; and
a step in which, if the classification condition corresponding to the input face image is a specific classification condition and the value of the face image corresponding to the specific classification condition in the reference face database is less than a preset threshold value, the input face image is selected as an image which can be additionally registered to the reference face database.

2. The method recited in Claim 1,
**characterized in that** the classification conditions, which the existing registered face images of the reference face database have, include at least one from among the expression of the input face image, an angle used for photographing the face image, a light direction illuminated on the face image, and the type of a light source.

3. The method recited in Claim 1,
**characterized in that**, in determining whether the face image corresponding to the specific classification condition in the reference face database is less than the preset threshold value, the determination is made based on the identify of a person included in the input face image.

4. The method recited in Claim 1,
**characterized in that**, if the input face image is additionally registered in the reference face database, it further includes a step in which a part of the existing registered face images in the reference face database is selected and deleted.

5. The method recited in Claim 4,
**characterized in that** the step of deleting includes,
a step in which the oldest face image among the existing registered face images in the reference face database is selected; and
a step in which the face image selected is deleted.

6. The method recited in Claim 4,
**characterized in that** the step of deleting includes,
a step in which, in order to recognize the identity of a face included in newly inputted images, the frequency of use for similarity matching is cumulatively counted from the preset timing to the present per the existing registered face images in the reference face database;
a step in which the image with the least frequency of use for similarity matching among the existing registered face images in the reference face database is selected; and
a step in which the face image selected is deleted.

7. The method recited in Claim 4,
**characterized in that** the step of deleting includes,
a step in which presence of similarity among the existing registered face images in the reference face database is determined;
a step in which images with the closest similarity among individual face images are selected from the existing registered face images;
a step in which one of the images selected is finally selected; and
a step in which the face image finally selected is deleted.

8. The method recited in Claim 7,
**characterized in that** the step of determining similarity uses the difference in matching values for face recognition with respect to each existing face image registered in the reference face database to determine such that a smaller difference in matching values has higher similarity between the two corresponding face images.

9. The method recited in Claim 4,
**characterized in that** the step of deleting includes,
a step in which variance in class is calculated among the existing registered face images in the reference face database;
a step in which the face image with the least variance of the face image is selected; and
a step in which the face image selected is deleted.

10. The method recited in Claim 9,
**characterized in that** the step of calculating variance includes,
a step in which one of the existing registered face images in the reference face database is selected; a step in which the mean of face recognition matching values for the remainder of existing registered face images except for the face image selected is found; and
a step in which the difference between the face recognition matching value of the one existing registered face image selected and the mean of the remaining face recognition matching values is found.

11. The method recited in Claim 9,
**characterized in that** the step of calculating variance includes,
a step in which the mean of face recognition matching values for the existing registered face images in the reference face database is found; and
a step in which a difference between the mean of the face recognition matching values and the face recognition matching value for each of the existing registered face images is found.

12. A method for managing a reference face database to improve face recognition under a restricted memory
environment comprising,
a step in which at least one new input face image is acquired;
a step in which the input face images are subject to clustering by a specific face recognition metric to a group into similar images;
a step in which a face image corresponding to a centroid face image or a mean face image is selected as a representative face image among the input face images that are grouped; and
a step in which the representative face image selected is additionally registered to a reference face database used for face recognition.

13. The method recited in Claim 12,
**characterized in that** the step of grouping includes,
a step in which the matching value for face recognition is calculated for each of the input face images; and a step in which images with high similarity are grouped based on the matching values calculated.

14. The method recited in Claim 13,
**characterized in that** the step of selecting as the representative face image involves selecting the face image which has a centroid matching value among the matching values calculated or the matching value closest to the mean matching value as the representative face image.

15. The method recited in Claim 12,
**characterized in that** the step of additionally registering in the reference face database includes,
a step in which classification conditions corresponding to the representative face image are determined with reference to the classification conditions which the existing registered face images of the reference face database have; and
a step in which, if the classification condition corresponding to the representative face image is a specific classification condition and the face image corresponding to the specific classification condition in the reference face database is less than a preset threshold value, the representative face image is additionally registered to the reference face database.

16. The method recited in Claim 12,
**characterized in that**, if the input face image is additionally registered in the reference face database, it further includes a step in which a part of the existing registered face images in the reference face database is selected and deleted.

17. The method recited in Claim 16,
**characterized in that** the step of deleting includes a step in which the oldest face image is selected among the existing registered face images in the reference face database; and
a step in which the face image selected is deleted.

18. The method recited in Claim 16,
**characterized in that** the step of deleting includes,
a step in which, in order to recognize the identity of a face included in newly inputted images, the frequency of use for similarity matching is cumulatively counted from the preset timing to the present per the existing registered face images in the reference face database;
a step in which the image with the least frequency of use for similarity matching among the existing registered face images in the reference face database is selected; and
a step in which the face image selected is deleted.

19. The method recited in Claim 16,
**characterized in that** the step of deleting includes,
a step in which the presence of similarity among the existing registered face images in the reference face database is determined;
a step in which images with the closest similarity among individual face images are selected from the existing registered face images;
a step in which one of the images selected is finally selected; and
a step in which the face image finally selected is deleted.

20. The method recited in Claim 19,
**characterized in that** the step of determining similarity uses the difference in matching values for face recognition with respect to each existing face image registered in the reference face database to determine such that a smaller difference in matching values has higher similarity between the two corresponding face images.

21. The method recited in Claim 16,
**characterized in that** the step of deleting includes,
a step in which variance in class is calculated among the existing registered face images in the reference face database;
a step in which the face image with the least variance of the face image is selected; and
a step in which the face image selected is deleted.

22. The method recited in Claim 21,
**characterized in that** the step of calculating variance includes,
a step in which one of the existing registered face images in the reference face database is selected;
a step in which the mean of face recognition matching values for the remainder of existing registered face images except for the face image selected is found; and
a step in which the difference between the face recognition matching value of the one existing registered face image selected and the mean of the remaining face recognition matching values is found.

23. The method recited in Claim 21,
**characterized in that** the step of calculating variance includes,
a step in which the mean of face recognition matching values for the existing registered face images in the reference face database is found; and
a step in which a difference between the mean of the face recognition matching values and the face recognition matching value for each of the existing registered face images is found.

24. An apparatus for managing a reference face database to improve face recognition performance under a
restricted memory environment comprising,
a reference face database that records face images used for face recognition; and
an additional registered face selection unit that, if a new input face image is acquired, determines the classification condition corresponding to the face input image with reference to the classification conditions which the existing registered face images of the reference face database have, and selects the input face image as an image which can be additionally registered to the reference face database if the classification condition corresponding to the input face image is a specific classification condition and the value of the face image corresponding to the specific classification condition in the reference face database is less than a preset threshold value.

25. The apparatus recited in Claim 24,
**characterized in that** the reference face database includes, as classification conditions which the existing registered face images have, at least one from among the expression of the input face image, an angle used for photographing the face image, a light direction illuminated on the face image, and the type of light source.

26. The apparatus recited in Claim 24,
**characterized in that** the additional registered face selection unit, in determining whether the face image corresponding to the specific classification condition in the reference face database is less than the preset threshold value, determines based on the identity of a person included in the input face image.

27. The apparatus recited in Claim 24,
**characterized in that** if the input face image is additionally registered in the reference face database, it further includes an existing registered face replacement unit that selects and deletes a part of the existing registered face images in the reference face database.

28. The apparatus recited in Claim 27,
**characterized in that** the existing registered face replacement unit selects and deletes the oldest face image among the existing registered face images in the reference face database.

29. The apparatus recited in Claim 27,
**characterized in that** the existing registered face replacement unit cumulatively counts the frequency of use for similarity matching from the preset timing to the present per the existing registered face image in the reference face database in order to recognize the identity of a face included in newly inputted images and then selects and deletes the image with the least frequency of use for similarity matching among the existing registered face images in the reference face database.

30. The apparatus recited in Claim 27,
**characterized in that** the existing registered face replacement unit determines the presence of similarity among the existing registered face images in the reference face database and selects and deletes images with the closest similarity among individual face images from the existing registered face images.

31. The apparatus recited in Claim 30,
**characterized in that** the existing registered face replacement unit calculates the matching value for face recognition with respect to each of the input face images and groups the images with high similarity based on the matching values calculated.

32. The apparatus recited in Claim 27,
**characterized in that** the existing registered face replacement unit calculates variance in class among the existing registered face images in the reference face database, and selects and deletes the face image whose variance of the face images is the smallest.

33. The apparatus recited in Claim 32,
**characterized in that** the existing registered face replacement unit, in calculating the variance, selects one of the existing registered face images in the reference face database, finds the mean of face recognition matching values for the remainder of the existing registered face images except for the face image selected, and finds the difference between the face recognition matching value of the one existing registered face image selected and the mean of the remainder of face recognition matching values.

34. The apparatus recited in Claim 32,
**characterized in that** the existing registered face replacement unit, in calculating the variance, finds the mean of face recognition matching values for the existing registered face images in the reference face database, and finds the difference between mean of the face recognition matching values and the face recognition matching value for each of the existing registered face images.

35. An apparatus for managing a reference face database to improve face recognition performance under a
restricted memory environment comprising,
a reference face database that records the face image used for face recognition; and
an additional registered face selection unit that, upon acquiring at least one new input face image, performs clustering on the input face images by a specific face recognition metric to the group into similar images, selects the face image corresponding to the centroid face image or mean face image among the input face images grouped as a representative face image and additionally registers the representative face image selected to the reference face database.

36. The apparatus recited in Claim 35,
**characterized in that** the additional registered face selection unit calculates the matching value for face recognition with respect to each of the input face images, and groups them into the images with high similarity based on the matching values calculated.

37. The apparatus recited in Claim 36,
**characterized in that** the additional registered face selection unit selects the face image having the matching value closest to the centroid matching value or mean matching value among the matching values calculated as the representative face image.

38. The apparatus recited in Claim 35,
**characterized in that** the additional registered face selection unit, in additionally registering in the reference face database, determines the classification conditions corresponding to the representative face image with reference to the classification conditions that the existing registered face images of the reference face database have, and additionally registers the representative face image to the reference face database if the classification condition corresponding to the representative face image is a specific classification condition and the face image corresponding to the specific classification condition in the reference face database is less than a preset threshold value.

39. The apparatus recited in Claim 35,
**characterized in that** it further includes an existing registered face replacement unit that selects and deletes a part of the existing registered face images in the reference face database if the input face image is additionally registered in the reference face database.

40. The apparatus recited in Claim 39,
**characterized in that** the existing registered face replacement unit cumulatively counts the frequency of use for similarity matching from the preset timing to the present per the existing registered face image in the reference face database in order to recognize the identity of a face included in newly inputted images and then selects and deletes the image with the least frequency of use for similarity matching among the existing registered face images in the reference face database.

41. The apparatus recited in Claim 39,
**characterized in that** the existing registered face replacement unit calculates variance in class among the existing registered face images in the reference face database, and then selects and deletes the face image whose variance of the face images is the smallest.

42. A computer readable recording medium in which a computer program for selecting and replacing a face
image is recorded according to the method in any one of the claims from Claim 1 to Claim 23.
